# EUROPEAN PATENT APPLICATION

(11) **EP 1 304 461 A1**
(43) Date of publication of application: **23.04.2003**
(21) Application number: 02022937.3
(22) Date of filing: 11.10.2002
(51) Int. Cl.: F02B 27/02

(54) **Intake manifold for internal combustion engine, and multiple and independent intake passages**

(30) Priority: 17.10.2001 JP 2001318800
(71) Applicant: Hitachi, Ltd., Chiyoda-ku, Tokyo 101-8010 (JP); Hitachi Car Engineering Co., Ltd., Hitachinaka-shi, Ibaraki 312-0062 (JP)
(72) Inventor: Nishimura, Mitsunori, Hitachinaka-shi, Ibaraki 312-0063 (JP); Niitsuma, Shigeto, Mito-shi, Ibaraki 311-4145 (JP); Kuwano, Morio, Nishiibaraki-gun, Ibaraki 309-1705 (JP); Nemoto, Hiroyuki, Naka-gun, Ibaraki 319-1106 (JP); Hoshika, Hiroaki, Hitachinaka-shi, Ibaraki 312-0052 (JP)
(74) Representative: Beetz & Partner Patentanwälte

(57) **Abstract**

The invention relates to an intake manifold for an internal combustion engine, being variable in an intake length, comprising: a first volume chamber (1) disposed in a downstream side of a throttle valve (101) for controlling an intake air passing through an air-cleaner (110); first independent intake passages (2) being divided from said first volume chamber (1) for guiding the air within said first volume chamber (1) into each of cylinders (132); second independent intake passages (3) joining and conducting to each of said first independent intake passages (2), each of which is provided for said each of cylinders (132) respectively; a second volume chamber (4) conducting to all of said second independent intake passages (3); and valves (20) being provided in said independent intake passages (2, 3) for conducting/shutting off between said second volume chambers (4) and said first independent intake passage (2), wherein said first independent intake passage (2) and said first volume chamber (1) are built up with a plural number of synthetic resin molded members, and said second independent intake passage (3) surrounding said valve (20) is formed with a synthetic resin molded member being separate from the synthetic resin molded member forming said first volume chamber (1) and said first independent intake passage (2).

## Description

### BACKGROUND OF THE INVENTION

The present invention relates to an intake manifold for an internal combustion engine, and in particular to an intake manifold for an internal combustion engine having a function of variable intake length, whose main material is synthetic resin.

Conventionally, technology relating to an intake manifold (a manifold of independent intake passages), being made of a material, mainly including synthetic resin therein, is already known, for example in JP-A 04-008823, JP-A 02-230919, JP-A 05-321675, JP-A 03-141820, JP-A 02-277919, etc.

However, the manifold of independent intake passages (i.e., the intake manifold) of the conventional art has a problem of being bad in moldability or formability because of the complexity of configuration thereof. Also, because of inferiority in accuracy of forming, there are also problems that, air leakage sometimes occurs in a part of a valve of variable intake length and/or the valve is tightened in the movement thereof, in particular in an air-intake apparatus equipped with a mechanism of variable intake length.

### SUMMARY OF THE INVENTION

A first object according to the present invention is to provide a manifold of independent intake passages (an intake manifold) showing a superior airtight property (air-tightness) in the part of the variable intake-length valve and/or a manifold of independent intake passages (i.e., an intake manifold) having smooth movement of the variable intake length valve.

A second object according to the present invention is to provide a manifold of independent intake passages (i.e., an intake manifold) being superior in moldability or formability thereof, and made of material including synthetic resin mainly.

First, according to the present invention, for accomplishing the object(s) mentioned above, there can be provided an intake manifold for an internal combustion engine, being variable in an intake length, comprising: a first volume chamber disposed in a downstream side of a throttle valve for controlling an intake air passing through an air-cleaner; first independent intake passages being divided from said first volume chamber for guiding the air within said first volume chamber into each of cylinders; second independent intake passages joining and conducting to each of said first independent intake passages, each of which is provided for said each of cylinders respectively; a second volume chamber conducting to all of said second independent intake passages; and/or valves being provided in said independent intake passages for conducting/ shutting off between said second volume chambers and said first independent intake passage, wherein said first independent intake passage and/or said first volume chamber are built up with a plural number of synthetic resin molded members, and said second independent intake passage surrounding said valve is formed with a synthetic resin molded member being separate from the synthetic resin molded member forming said first volume chamber and/or said first independent intake passage.

Second, according to the present invention, also for accomplishing the object(s) mentioned above, there can be provided a manifold of independent intake passages, being built up with a plural number of passage bodies, each of which is formed with a volume chamber at one end and a connecting flange portion at the other end, in which an opening is formed in each said passage body at a middle position between said volume chamber and said connecting flange, and other flange portion is formed around said each opening, wherein each said intake passage body is built up with separate molded bodies, a first portion defined by a surface along with an air flow on a side having said opening portion, and/or a second portion on a side having no opening portion, and each said passage body is built up by connecting said first and second portions.

### BRIEF DESCRIPTION OF THE DRAWINGS

The present invention will be understood more fully from the detailed description given hereinafter and from the accompanying drawings of the present invention, which, however, should not be taken to be limitative to the invention, but are for explanation and understanding only.

In the drawings:
Fig. 1 is a cross-section view of an intake manifold being variable in the intake length thereof, in relation to the conventional art;
Fig. 2 is a structure view of an intake system of an internal combustion engine;
Fig. 3 is a view for showing an output torque characteristic of an internal combustion engine, equipped with the variable intake;
Fig. 4 is a front view of an intake manifold for showing the intake manifold for an internal combustion engine, according to the present invention;
Fig. 5 is a perspective view of an outer configuration of the intake manifold for an internal combustion engine shown in Fig: 4;
Fig. 6 is a perspective view of an outer configuration of the intake manifold for an internal combustion engine shown in Fig. 5, seen from a rear side thereof;
Fig. 7 is a perspective view of the intake manifold for an internal combustion engine shown in Fig. 5, being removed with a second independent intake passages and a second volume chamber therefrom;
Fig. 8 is a right-hand side view of the intake manifold shown in Fig. 4;
Fig. 9 is a cross-section view for showing the intake passage, seen from the right-hand side of the intake manifold for an internal combustion engine, shown in Fig. 4;
Fig. 10 is a cross-section view for showing an intake passage of the intake manifold for an internal combustion engine, according to the present invention;
Fig. 11 is an A-A cross-section view for showing a further intake manifold for an internal combustion engine, according to the present invention, along with arrows shown in Fig. 8;
Fig. 12 is a view for showing a vacuum diaphragm actuator for a valve driving means in the A-A cross-section view along with arrows indicated in Fig. 8;
Fig. 13 is a perspective view of an outer configuration of Fig. 12;
Fig. 14 is a cross-section view for showing a more further intake manifold for an internal combustion engine, according to the present invention;
Fig. 15 is a view for showing manufacturing processes for a further intake manifold for an internal combustion engine, according to the present invention;
Fig. 16 is across-section view for showing a more further intake manifold for an internal combustion engine, according to the present invention;
Fig. 17 is a front view of an intake manifold, for showing a further intake manifold for an internal combustion engine, according to the present invention;
Fig. 18 is a B-B cross-section view along with arrows shown in Fig. 17; and
Fig. 19 is a C-C cross-section view along with arrows shown in Fig. 17.

### DETAILED DESCRIPTION OF THE PREFERRED EMBODIMENTS

The present invention will be discussed hereinafter in detail according to the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not-shown in detail in order to avoid unnecessary obscurity of the present invention.

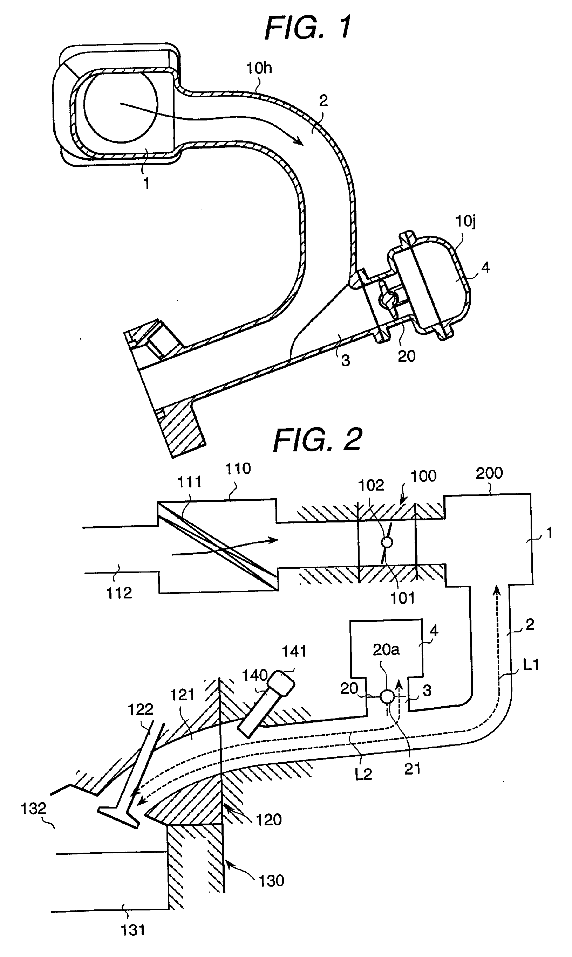

A variable length intake manifold has such the structure as is shown in Fig. 1. Namely, into the variable length intake manifold shown in Fig. 1 is taken in the outside air (or fresh air) through an air-cleaner, though not shown in the figure, and the intake air (or the suction air) passing through the air-cleaner is metered or measured by means of a throttle valve to be supplied. The variable length intake manifold comprises: a first volume chamber 1 located in the downstream of the throttle valve; a first independent intake passage 2, being branched or divided from the first volume chamber 1 for transferring the air within the first volume chamber 1 into each cylinder; a second independent intake passage 3, conducting to the first independent intake passages 2; a second volume chamber 4, conducting to all the second independent intake passages 3 on an opposite side of a joint portion between the first independent intake passages 2 and the second independent intake passage 3; and a valve 20 for conducting/shutting-off between the second volume chamber 4 provided on the second independent intake passage 3 and the first independent intake passages 2. The second independent intake passage 3 surrounding the valve 20 is made up with the first volume chamber 1 and the first independent intake passage 2, which are formed by means of a one-piece mold in the form of a main intake passage.

The present intake manifold being variable in the intake length is that of using inertia air-intake effects by means of the first independent intake passage 2, as a long induction pipe being long in the length thereof, and the second independent intake passage 3, as a short induction pipe being short in the length thereof.

In general, it is already known that an output torque characteristic of an internal combustion engine is shifted to a side of lower revolution speed if making the length long of the independent intake passage branched from the volume chamber, which is provided in the downstream of the throttle valve. Then, in a low revolution speed region or area of the internal combustion engine, the output torque is increased in synchronism with the first independent intake passage 2, which is long in the length of the induction pipe, by closing the valve 20 so as to shut off the second independent intake passage 3, in the low revolution speed region, while in a high revolution speed region, the output torque in the high revolution speed region is also increased, by bringing the torque in synchronism with the second independent intake passage 3, which is short in the induction pipe length, by opening the valve 20. For achieving such the inertia supercharging effect as was mentioned, of course while setting the length of the induction pipe, the cross-section area of the induction pipe, and the volume of the volume chamber appropriately, so as to obtain an output torque aimed, as well, it is important to minimize a gap, which is defined between the short second independent intake passage 3 and the valve 20 when the valve 20 is closed, and further to operate the valve 20 at a predetermined timing.

Conventionally, the intake manifold for an internal combustion engine constructed in this manner is mainly made of aluminum. However, the intake manifold made by the molding of synthetic resin is now coming up in the number thereof, because of the following reasons: i.e., a light-weight of the product; small or low surface roughness in a portion of the intake passage; high dimensional accuracy of the sizes; no necessity of machining after forming; and cheap price of production cost thereof. When the intake manifold for an internal combustion engine is changed from or replaced with the conventional one made of aluminum to a one formed of synthetic resin, there can be obtain an effect that the product comes to be light in the weight due to the small specific weight thereof, in particular in the case of the intake manifold for an internal combustion engine is made of synthetic resin, comparing to the conventional intake manifold for an internal combustion engine made of aluminum. And also, comparing to that manufactured by the aluminum casting, or the aluminum die-cast, the intake manifold for an internal combustion engine, being made of synthetic resin, comes to be small or low on the surface roughness in the portion of the intake passage, and therefore can be obtained an effect that the intake resistance is suppressed or kept to be small. Furthermore, comparing to that manufactured by the aluminum casting, or the aluminum die-cast, the intake manifold for an internal combustion engine, being made of synthetic resin, is high in the dimensional accuracy thereof, and then no machining is necessary after the forming thereof, therefore obtaining an effect that the manufacturing cost can be reduced to be cheap. In this manner, changing the intake manifold for an internal combustion engine, from the conventional aluminum-made one to the one formed of synthetic resin, brings about various effects, and thereby achieving the light-weight, a low mileage, a high output for an automobile.

However, although a molded article of synthetic resin is high in the dimensional accuracy in the sizes thereof, comparing to those obtained by the aluminum casting and the aluminum die-cast, but the dimensional accuracy after the molding comes down, as the product becomes large in the sizes thereof. If this dimensional accuracy is low, there is caused a necessity of setting a large clearance between the valve 20 and the wall surface of the second independent intake passage 3 surrounding the valve 20. If setting such the large clearance between the valve 20 and the wall surface of the second independent intake passage 3 surrounding the valve 20, the valve 20 is deteriorated, in particular, in the property of shutting-off the passage when it is fully closed, and thereby bringing about a case where no effect can be obtained due to the variable intake, in a case.

Also, if being low in this dimensional accuracy, also the dimensional accuracy is lowered down on the sizes of a shaft for driving the valve 20 and a bearing system thereof, and further a friction torque comes up upon rotation of the shaft, thereby causing a necessity of uprising the output of an actuator for driving the valve 20, in a case. In this manner, if trying to increase the output of the actuator, it results in the actuator being large in the sizes thereof, as well as rising-up of a unit cost of the actuator itself.

According to the following, an object is to provide an intake manifold for an internal combustion engine, for obtaining high air-tightness between the valve and the wall of the intake passage surrounding the valve, thereby being able to restrain the friction torque to be small when the valve is driven, and also achieving an improvement on the output torque characteristic of the internal combustion engine, as well as small-sizing of a driving means for making the valve open/close.

Hereinafter, explanation will be made of the intake manifold for an internal combustion engine, by referring to the drawings attached.

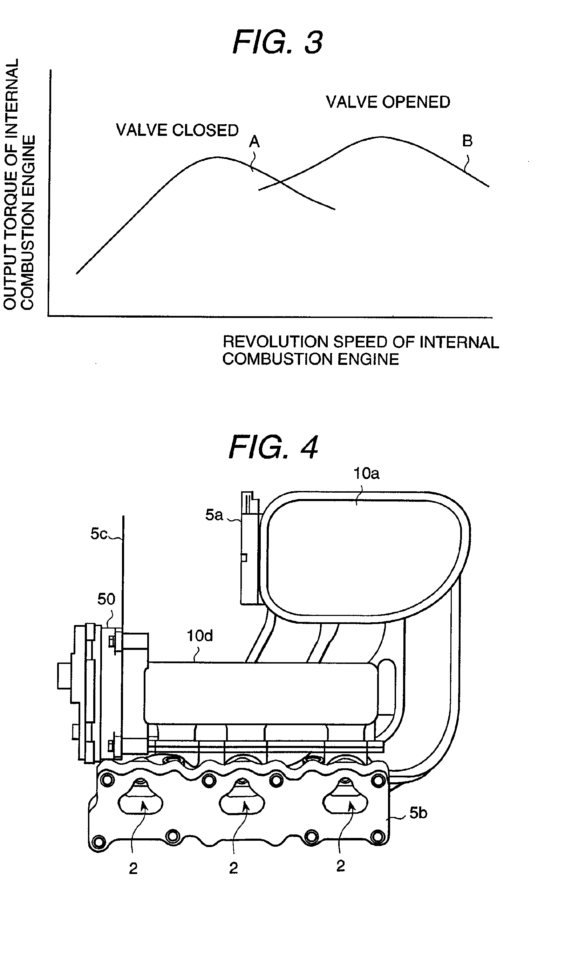

First of all, explanation will be made on the valuable intake in relation to the intake manifold according to the present invention, by referring to Figs. 2 and 3. In the figures, Fig. 2 shows the structure view of an intake system of the internal combustion engine, and Fig. 2 briefly shows the output torque characteristic of the internal combustion engine equipped with the variable intake.

In Fig. 2, an intake manifold 200, being provided for supplying an intake air passing through an air-cleaner into an intake port, while controls an amount of the intake air by a throttle valve, comprises: a first independent intake passage 2 and a second independent intake passage 3, for each of cylinders of the internal combustion engine. The first independent intake passage 2 is branched off or divided from a volume chamber 1 disposed in a downstream side of the throttle valve, and is communicating or conducting to an each intake port 121. Also, the second independent intake passage 3 is provided to divide from the first independent intake passage 2, and a tip of the second independent intake passage 3 is joined and conducted to the second volume chamber 4. In each of those second independent intake passages 3 is provided a valve 20. The valve 20 is attached or mounted onto each shaft, respectively, being rotatable about 90°, so that the each second independent intake passages 3 can be opened or closed by rotating the each valve 20 by 90°, in the structure thereof. In that structure, turning the each valve 20 by 90°, so as to open the each second independent intake passage 3, brings about conductive condition between the first independent intake passages 2 and the second volume chamber 4, while turning back the each valve 20 by 90° in the reverse direction, so as to close the each second independent intake passage 3, brings about shut-off condition between the first independent intake passages 2 and the second volume chamber 4.

The intake air supplied into the internal combustion engine, passing through the first independent intake passage 2 and the second independent intake passage 3, first of all, is taken from an outside into an inside of air-cleaner 110 through a duct 112. Then, the intake air taken into the air-cleaner 110 passes through an air-filter 111 provided within the air-cleaner 110, and is supplied to a throttle valve 101 of a throttle body 100. The intake air supplied to the throttle valve 101 is measured or metered by means of the throttle valve 101, and is sucked into a cylinder 132 when a suction valve 122 is opened, passing through the first volume chamber 1 and the first independent intake passage 2 of the intake manifold 200, as well as the intake port 121 of a cylinder head 120.

In this manner, an output of the internal combustion engine operating with suction of the air therein has such the characteristic as is shown in Fig. 3. Namely, under the condition that the valve 20 is closed, which is provided within each of the second independent intake passage 3, due to the inertia supercharging effect depending upon the length L1 of the intake conduit from the suction valve 122 to the first volume chamber 1 shown in Fig. 2, it is possible to obtain an output torque being high in the low revolution speed region, as is indicated by a curve A. Also, under the condition that the valve 20 is opened, which is provided within each of the second independent intake passage 3, due to the inertia supercharging effect depending upon the short length L2 of the second independent intake passage 3, i.e., from the suction valve 122 to the second volume chamber 4 shown in Fig. 2, it is possible to obtain an output torque being higher than that of the curve A in the high revolution speed region, as is indicated by a curve B. From the curve A and the curve B, it is possible to obtain an output torque characteristic being high over a wide revolution speed range, by closing the each valve 20 within the revolution speed range lower than the revolution number a, while opening the each valve 20 within the revolution speed range higher than the revolution number α.

A further intake manifold for an internal combustion engine according to the present invention is shown in Figs. 4 to 10.

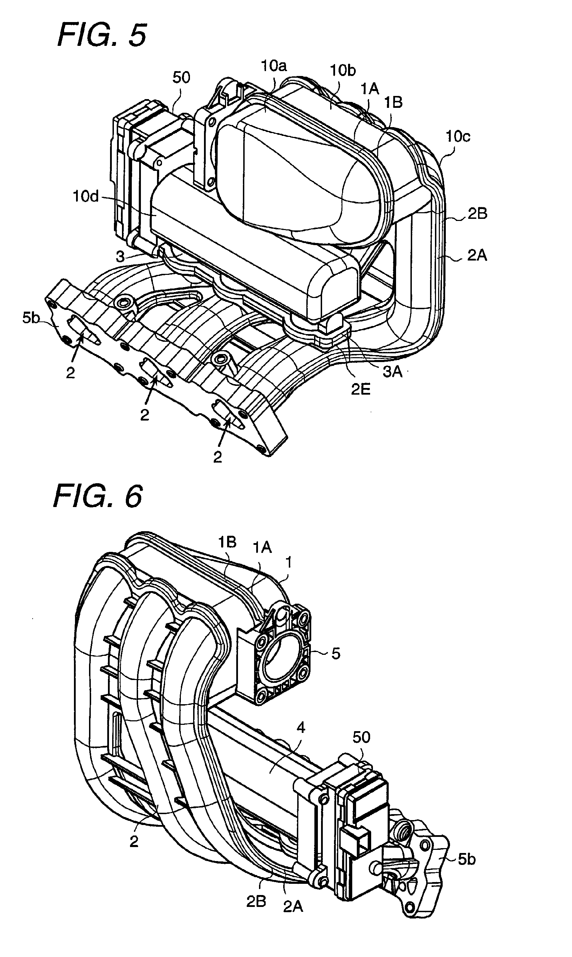

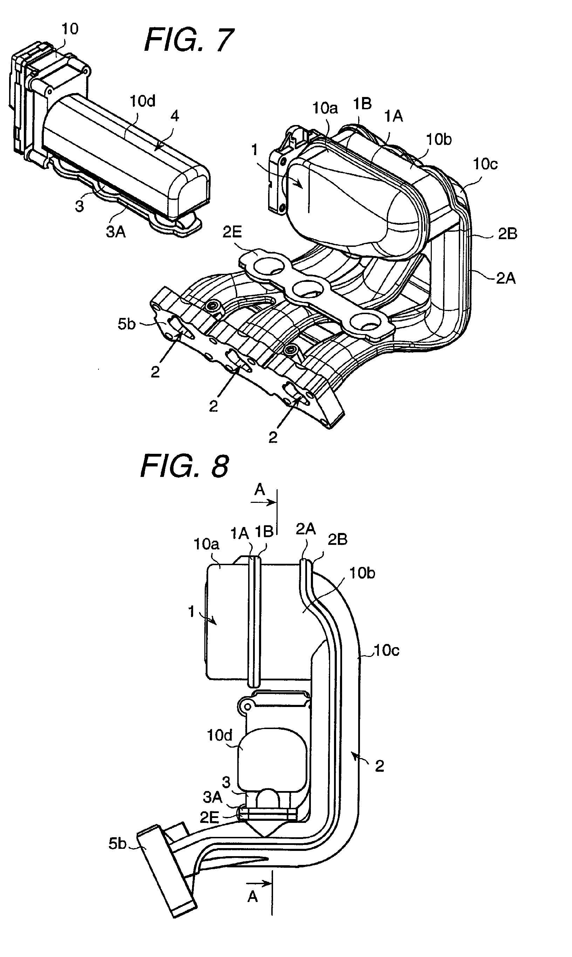

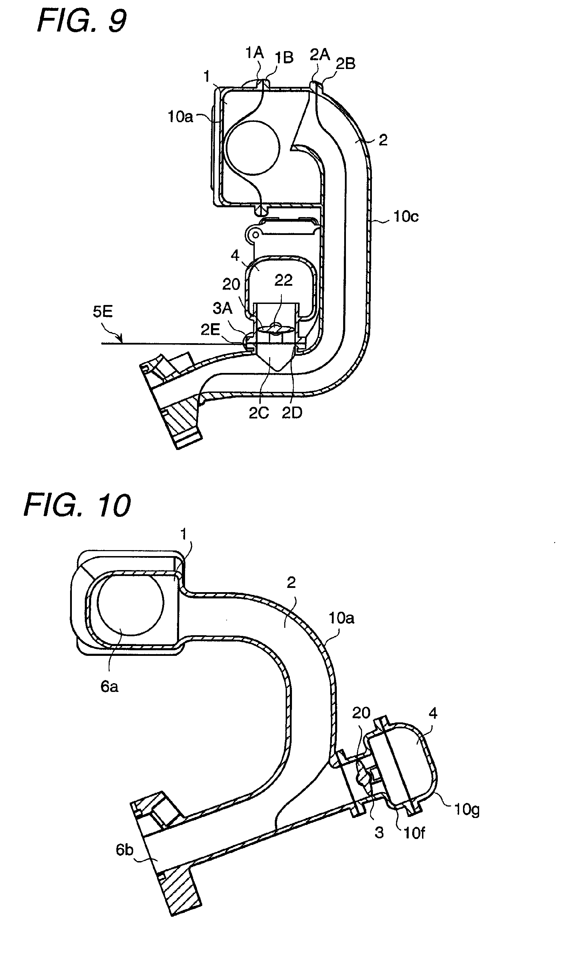

Figs. 4 to 9 are showing the invention corresponding to the pending claim 1, in particular: Fig. 4 is the front view of the intake manifold for an internal combustion engine, according to the present invention, being equipped with a driving means for making the valve open/close; Fig. 5 a perspective view of an outlook of the intake manifold for an internal combustion engine shown, in Fig. 4; Fig. 6 also the perspective view of the outlook of the intake manifold for an internal combustion engine, shown in Fig. 5, being viewed from a rear side thereof; Fig. 7 an exploded perspective view of the intake manifold for an internal combustion engine, shown in Fig. 5, in the condition where the second independent intake passage and the second volume chamber thereof are removed therefrom; Fig. 8 the right-hand side view of the intake manifold for an internal combustion engine, shown in Fig. 4; and Fig. 9 a cross-section view for showing the intake passages of the intake manifold for an internal combustion engine, shown in Fig. 4, being viewed from the right-hand side thereof.

Though explanation will be made on the intake manifold for use in a three(3)-cylinder internal combustion engine the present invention should not be restricted to only such internal combustion engines having three (3) cylinders. Also, the intake manifold for an internal combustion engine illustrated in Fig. 4 is attached or mounted onto the cylinder head of the internal combustion engine, through the throttle body for controlling an amount of the intake air, a flange 5a and a flange 5b, under the condition of application thereof.

In the Figs. 4 to 9, the intake manifold for an internal combustion engine is built up with a first volume chamber 1, first independent intake passages 2, second independent intake passages 3, and a second volume chamber 4. The each first independent intake passage 2 and the each second independent intake passage 3 are provided for an each cylinder, and the first volume chamber 1 provided at an end portion of the first independent intake passage 2 is provided in the form of a volume chamber for conducting to each of the first independent intake passages 2 provided in the same number of the cylinders, by only one (1) in the number thereof. Further, the second volume chamber 4 provided at an end portion of the second independent intake passage 3 is also provided in the form of a volume chamber for conducting to each of the second independent intake passages 3 provided in the same number of the cylinders, by only one (1) in the number thereof.

The first volume chamber 1 is made up with a synthetic resin molded member or unit 10a formed in a container-like shape, being opened at an end thereof while being formed a flange 1A for use of connection at the opening portion thereof, and a synthetic resin molded member 10b formed in a cylinder-like shape, being provided with a flange 1B to be connected with the flange 1A of the synthetic resin molded member 10a at an end thereof. The synthetic resin molded member 10b is formed in a shape, like cutting the cylinder-like passage into two (2), at the other end thereof, while at an end thereof is provided a flange 2A.

Also, each the second independent intake passage 2 is made up with the synthetic resin molded member 10b formed in the shape of cutting the cylinder-like passage into two (2), and a synthetic resin molded member 10c, which is provided with the flange 2B to be connected with the flange 2A of the synthetic resin molded member 10b at an end thereof, and is formed in the shape of cutting the other cylinder-like passage into two (2). Connecting the flange 2A of the synthetic resin molded member 10b and the flange 2B of the synthetic resin molded member 10c builds up the first independent intake passage 2. In the synthetic resin molded member 10b for making up the first independent intake passage 2 is formed an opening 2C for conducting to the second independent intake passage 3 near to the intake port, and around this opening 2C is formed a projecting portion 2D. Further, at a tip of this projecting portion 2D is formed a flange 2E.

Further, on the second independent intake passage 3 is provided a flange 3A, to be connected to the flange 2E formed at the tip of the projecting portion 2D of the first independent intake passage 2 at one end thereof, and it is formed in a cylindrical shape. At the other end of the second independent intake passage 3 is provided the second volume chamber 4 formed in the container-like shape. The second independent intake passages 3 and the second volume chamber 4 are formed in one body by a synthetic resin molded member 10d.

Moreover, within the second independent intake passage 3 is provided the valve 20 for turning conductive/shut-off between the first independent intake passage 2 and the second volume chamber 4. The valve 20 is pivoted onto a shaft to be supported rotatablely, so that it can fully open and close the second independent intake passage 3 by rotating around 90°.

Further, the first volume chamber 1 and the first independent intake passage 2 also may be formed in one piece of a synthetic resin molded member 10e, as shown in Fig. 10. However, the number of the synthetic resin molded members for building up the first volume chamber and/or the first independent intake passage 2 is out of the question. Further, though the second volume chamber 4 is built up with a synthetic resin molded member 10f and a synthetic resin molded member log in Fig. 10, however the number of the synthetic resin molded members is out of the question with the second volume chamber. Moreover, the number of the synthetic resin molded members making up the second independent intake passage 3 is also out of the question. In the figure, a reference numeral 6a indicates an opening.

In this manner, the invention described in accordance with the pending claim 1 is characterized, as shown in Fig. 9, in that the second independent intake passage 3 surrounding the valve 20 is made up with the synthetic resin molded member 10d, separate from the synthetic resin molded members 10a, 10b and 10c for building up the first volume chamber 1 and the first independent intake passage 2.

Herein, in the case where the first volume chamber 1, the first independent intake passage 2, the second independent intake passage 3, and the second volume chamber 4 are similar to one another in the sizes thereof, it is possible to maintain the sizes of the synthetic resin molded member 10d to be small, which builds up the-intake passage 3 surrounding the valve 20 shown in Fig. 9, comparing to a synthetic resin molded member 10h for building up the second independent intake passage 3 of the conventional intake manifold shown in Fig. 1 mentioned above, and therefore, the smaller in the sizes of the members to be formed, the higher in the dimensional accuracy of the members formed, due to deformation after the forming and the dimensional accuracy of the dies thereof.

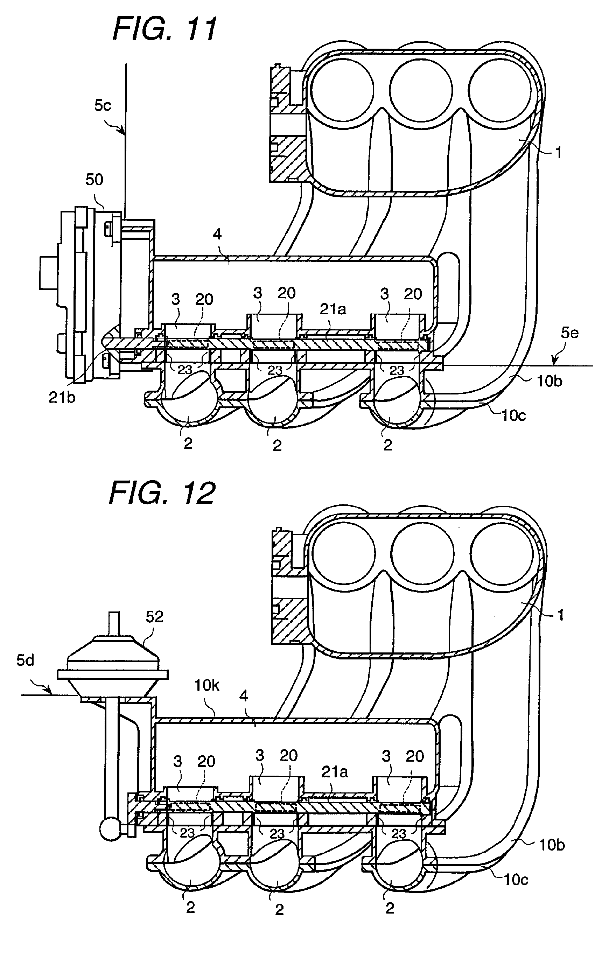

Fig. 11 shows the intake manifold for an internal combustion engine according to the present invention.

Fig. 11 shows the invention as corresponding to the pending claim 2, and this Fig. 11 shows an A-A cross-section view along with arrows indicated, passing through a center of a shaft 22 of the intake manifold for an internal combustion engine shown in Fig. 8.

In Fig. 11, an aspect in which the present invention differs from that shown in Fig. 9 lies in the structure of the valve 20. Thus in this Fig. 11, a shaft 21a is provided, being supported to be freely rotatable by a shaft-bearing 23 and penetrating through the respective second independent intake passages 3 provided for each of the cylinders. This shaft-bearing 23 is supported or held on the synthetic resin molded member 10d. Within the second independent intake passages 3 of this shaft 21a are provided the valves 20 for turning the respective second intake passages 3 open/close, to be formed in one body together with the shaft 21a. This shaft 21a is connected with a shaft 21b of a driving means 50, and therefore the shaft 21b is rotated round, by driving the driving means 50. The rotation of this shaft 21b makes the shaft 21a rotate, thereby bringing about open/close of the valve 20.

The driving means 50 is attached or mounted onto the flange 5c, which is provided in the synthetic resin molded member 10d forming the second independent intake passage 3, and is fixed by means of a screw 51. In this manner, according to the present embodiment, since the driving means 50 is mounted onto the flange 5c, which is provided on a synthetic resin molded member 10d forming the second independent intake passage 3, it is possible to increase the accuracy on degree of coaxial relationship between the shaft 21b of the driving means 50 and the shaft 21a of the intake manifold side, comparing to the case of being mounted on a member separate from the synthetic resin molded member 10d forming the second independent intake passage 3.

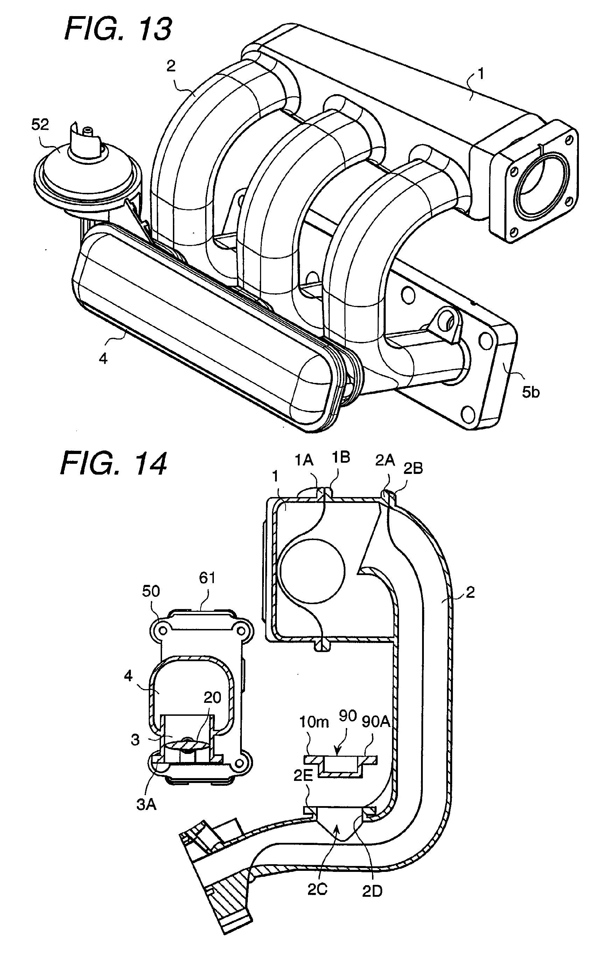

However, although the valve 20 shown in Fig. 11 is formed with the shaft 21a in one body (as a unit) in the structure thereof, but the valve 20 may be a body separate from the shaft 21a. Also, the driving means 50 for driving the valve 20 to open/close has an electric controllable motor, and the shaft 21b is rotated by torque of this electric controllable motor. Rotation of this shaft 21b makes the shaft 21a connected to the shaft 21b rotate, however, as shown in Figs. 12 and 13, the shaft 21b may be rotated by means of a vacuum diaphragm actuator 52 operating with vacuum, in the place of the driving means 50.

Fig. 14 shows a more further intake manifold for an internal combustion engine, according to the present invention.

Fig. 14 shows the invention as corresponding to the pending claims 3 and 4, and discloses the cross-section views of the first volume chamber 1, the first independent intake passage 2, the second independent intake passage 3, and the second volume chamber 4. This Fig. 14 shows a main intake passage module portion 60 made up with the first volume chamber 1 and the first independent intake passage 2, and also a variable intake module portion 61 made up with the second independent intake passage 3, the second volume chamber 4, and the valve 20 and the driving means 50, under the condition of being separated from.

In Fig. 14, the main intake passage module portion 60 is build up with the first volume chamber 1 and the first independent intake passage 2, and the first volume chamber 1 and the second independent intake passage 2 are same in the structure to that illustrated in Fig. 9 mentioned above. Also, to the variable intake module portion 61 are concentrated parts for achieving the effects of variable intake, i.e., being built up with the second independent intake passage 2, the second volume chamber 4, the valve 20 and the deriving means 50. This variable intake module portion 61 is so structured that it is detachable at the flange 3A of the second independent intake passage 3 with a tip of the cylinder-like projecting portion 2D formed on the opening 2C of the first independent intake passage 2.

The variable intake module portion 61 also has a seal member 90 to be attached on the flange 2E, but detachably, which is formed at the tip of the cylinder-like projecting portion 2D formed on the opening 2C of the first independent intake passage 2. This seal member 90 is formed in a cylindrical shape, at one end of which is formed a flange 90A to be connected to the flange 2E formed at the tip of the projecting portion 2D of the first independent intake passage 2, while at the other end of which is sealed up, and it is formed in one body by a synthetic resin molded member 10m.

Then, in a case where the variable intake module portion 61 is connected to the main intake passage module portion 60 by connecting the flange 3A of the second independent intake passage 3 and the flange 2E formed at the tip of the projecting portion 2D of the first independent intake passage 2, they can be applied or used as an intake manifold being variable in the intake-length thereof.

Further, in a case where the variable intake module portion 61 is taken out from the main intake passage module portion 60, by removing the flange 3A of the second independent intake passage 3 and the flange 2E formed at the tip of the projecting portion 2D of the first independent intake passage 2, while connecting the flange 90A of the seal member 90 and the flange 2E formed at the tip of the projecting portion 2D of the first independent intake passage 2, the first independent intake passage 2 comes to be sealed therewith, therefore the main intake passage module portion 60 can be applied or used as an intake manifold, but without the function of variable intake.

According to the present invention, being built up in this manner, the synthetic resin molded member 10b can be used or applied to various kinds of intake manifolds, thereby being able to obtain an effect of mass production, as well as reduction of the product cost thereof.

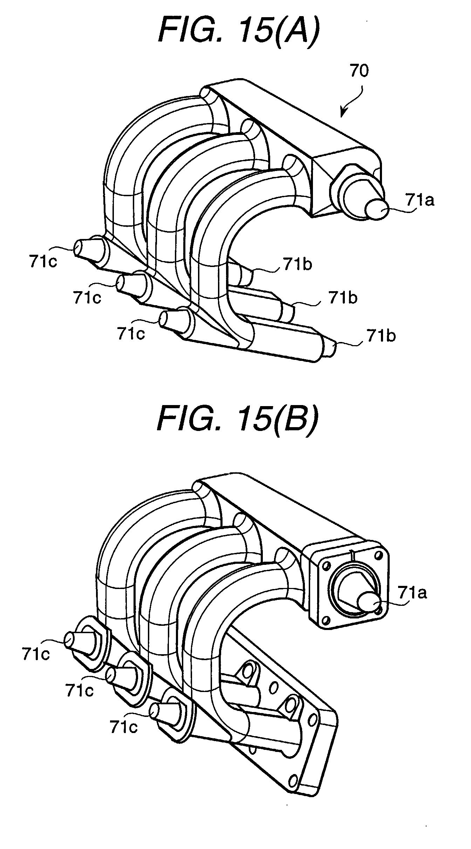

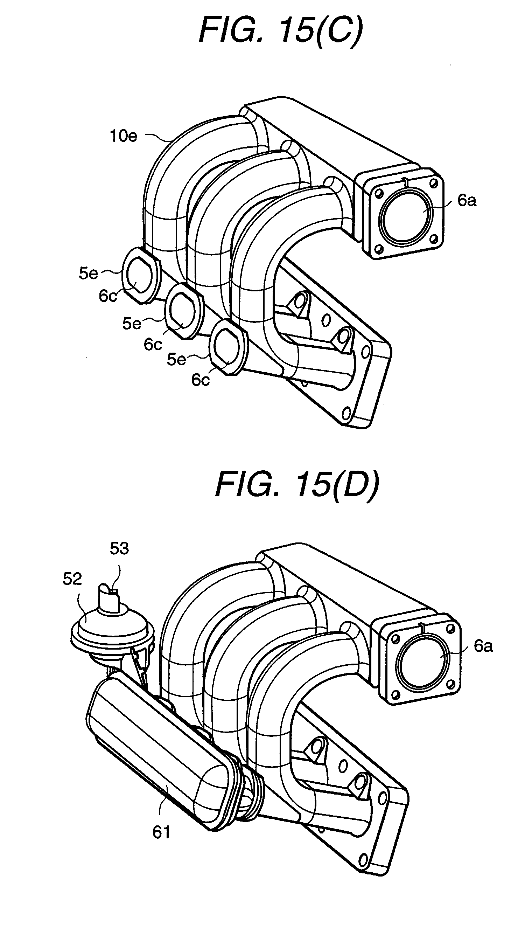

Figs. 15(A) to 15(D) are showing a further intake manifold for an internal combustion engine, according to the present invention.

Figs. 15(A) to 15(D) show the invention as corresponding to the pending claim 5, wherein a reference numeral 70 shown in Fig. 15(A) is a low-melting metal core (a lost core) for forming the first volume chamber 1 and the first independent intake passage 2 of the intake manifold. Also, reference numerals 71a, 71b and 71c shown in Fig. 15(A) are holding portions; at which portions the lost core 70 is held, not to move in the die when the lost core 70 is set into the forming die. Fig. 15(B) and Fig. 15(C) show the condition of the intake manifold before the lost core flows out therefrom after the injection mold, and the condition of the intake manifold after the lost core flows out therefrom, respectively.

In Fig. 15, the holding portion 71a is held on the opening 6a conducting to the throttle valve not shown in the figure, to the holding portion 71b on the opening 6b (shown in Fig. 10) conducting to the intake port of the cylinder head not shown in the figure, and to the holding portion 71c on the opening 6c shown in Fig. 15(C). This opening 6c is an end of the opening of the passage from the first independent intake passage 2. Also, Fig. 15 (D) shows the condition where the variable intake module portion 61 is mounted onto the intake manifold.

In this manner, according to the present described use of the opening 6c opened in the intake manifold, as an interface conducting to the second independent intake passage 3 of the variable intake module portion 61, enables an effective use thereof, by means of the holding portion for holding the lost core 70, without covering the intake passage by a plug or stopper.

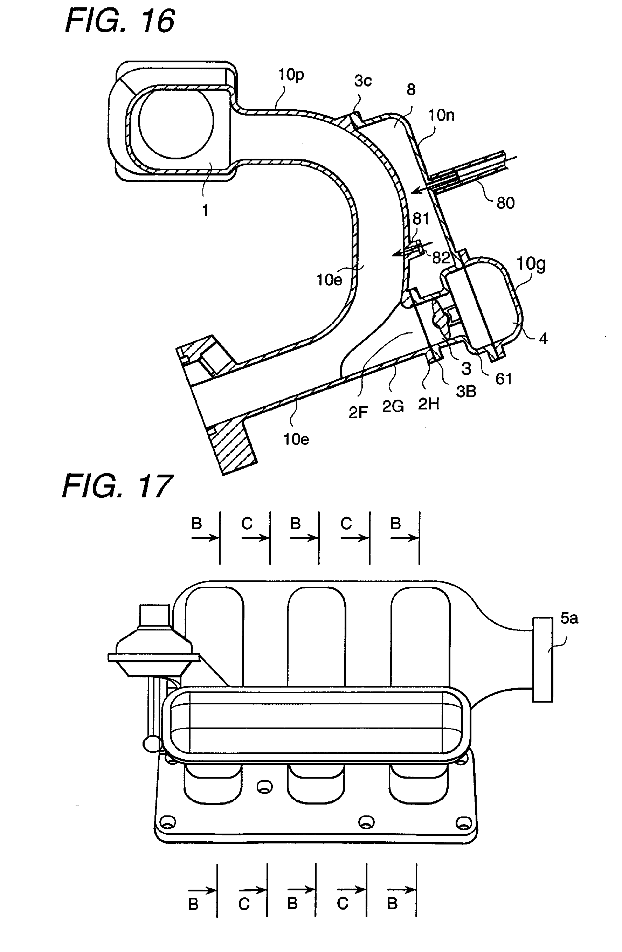

Fig. 16 shows a more further intake manifold for an internal combustion engine, according to the present invention.

Fig. 16 shows the invention as corresponding to the pending claim 6, wherein the first volume chamber 1 and the first independent intake passage 2 are formed in one body by a synthetic resin molded member or unit lop. In the synthetic resin molded member lop is formed an opening 2F conducting to the second independent intake passage, and on this opening is formed a cylinder-like projecting portion 2G. At a tip of this projecting portion 2G is formed a flange 2H. Also, the second independent intake passage 3 is provided with a flange 3B at an end thereof, for connecting to the flange 2H formed at the tip of the projecting portion 2G of the first independent intake passage 2, and is formed in a cylindrical shape. Further, at the cylinder-like other end of the second independent intake passage 3 is made up a portion of the second volume chamber 4, being formed to have a large diameter, and also the portion at the cylinder-like other end of the second independent intake passage 3 is formed in a cover-like shape, being provided with a flange 3C at an end thereof.

The flange 3B is connected to the flange 2H at the tip of the projecting portion 2G of the synthetic resin molded member 10p, which makes up the first independent intake passage 2, while the flange 3C at the end of the second independent intake passage 3 to the synthetic resin molded member 10p forming the first independent intake passage 2, thereby forming a vacuum tank 8 in the intake manifold.

Within this vacuum tank 8, the air flows in the direction indicated by arrows shown in the figure, when the pressure of the vacuum tank 8 is lower than that in the first independent intake passage 2, and there is also provided a check valve 81 for storing the vacuum in the vacuum tank 8. This check valve 81 is provided between the first independent intake passage 2 and the vacuum tank 8.

In the figure, a reference numeral 82 is a cover for holding the check valve 81.. At the tip of a hose 80 conducting to the vacuum tank 8 is provided a three-way valve not shown in the figure, and a further end thereof is conducting to a nipple 53 of the diaphragm actuator shown in Fig. 15(D). The vacuum stored within the vacuum tank 8 is used for driving the diaphragm actuator 51. In this manner, the vacuum tank 8 may be built up, by connecting the main intake passage module portion 60 and the variable intake module portion at 5e and 5f.

Figs. 17 to 19 shows a further intake manifold for an internal combustion engine according to the present invention.

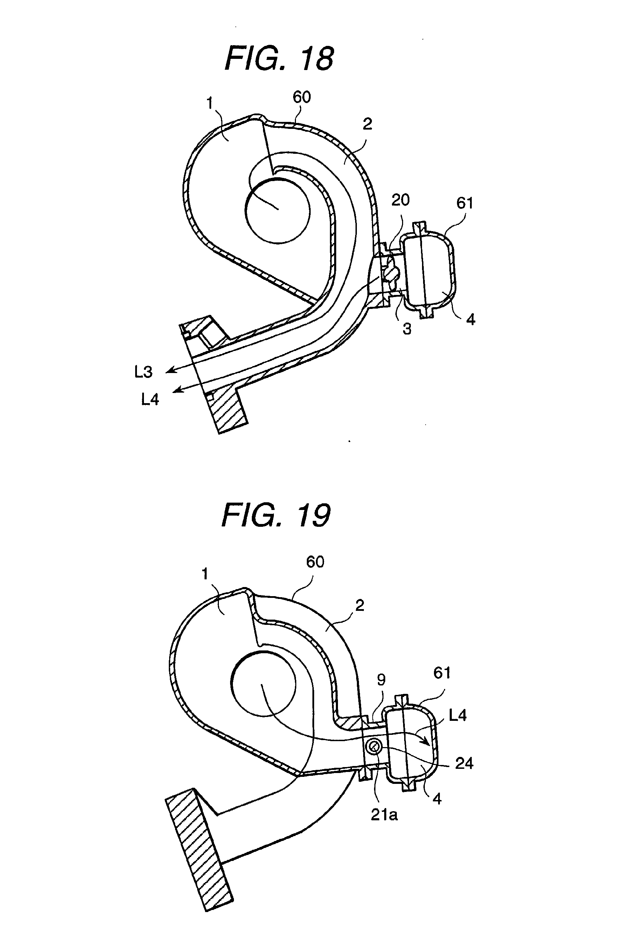

Figs. 17 to 19 shows the invention as corresponding to the pending claim 8, and in particular: Fig. 17 shows an outer configuration of the intake manifold; Fig. 18 a B-B cross-section view along with arrows shown in Fig. 17; and Fig. 19 a C-C cross-section view along with arrows shown in Fig. 17.

In Fig. 17, the main intake passage module portion 60, being made up with the first volume chamber 1 and the first independent intake passage 2 , is connected to the variable intake module portion 61, being made up with the second independent intake passage 3 having the valve 20 therein and the second volume chamber 4, and thereby building up the second independent intake passage 3 divided from the first independent intake passage 2 as shown in Fig. 18. At the same time, through a conductive passage 9, the first volume chamber 1 and the second volume chamber 4 are conductive to each other. The intake air flowing into an engine runs along with an arrow L3 when the valve 20 is closed, while it runs along arrows L3 and L4 when the valve 20 is opened. However, a reference numeral 21a is a shaft for driving the valve 20 open/close in the operation, and a reference numeral 24 a partition wall for dividing between an inside of the intake manifold and a room of the atmosphere. This structure is effective, in particular when the flow of L4 is needed from a viewpoint of the output torque characteristic of the internal combustion engine.

According to the present invention, with using synthetic resin as the main material thereof, it is possible to increase the air-tightness between the valve and the wall of the intake passage surrounding the valve, and also to maintain or reduce the friction torque when driving the valve to be small, thereby achieving the small-sizing of the driving means for driving the valve open/close, as well as an improvement of the output torque characteristic of the internal combustion engine.

According to the first aspect of the present application, wherein the second volume chamber, including the passage where the variable intake length valve is mounted therein, is built up with the molded member being separate from the portion built up with the first volume chamber and the first independent intake passage, therefore an improvement can be obtained on forming, in particular, in the passage portion where the variable intake length valve is mounted, as well as the air-tightness thereof. Or, the variable intake length valve can smoothly move in the movement thereof.

According to the second aspect of the present applicatiol wherein the manifold of independent intake passages is formed with a plural number of molded bodies or units, therefore an improvement can be obtained in the moldability or formability thereof, and also it can be manufactured easily under mass production. Further, the intake passages, being complex in the configuration thereof, can be also obtained with relatively ease.

Although the present invention has been illustrated and described with respect to exemplary embodiment thereof, it should be understood by those skilled in the art that the foregoing and various other changes, omission and additions may be made therein and thereto, without departing from the spirit and scope of the present invention. Therefore, the present invention should not be understood as limited to the specific embodiment set out above but to include all possible embodiments which can be embodied within a scope encompassed and equivalent thereof with respect to the feature set out in the appended claims.

## Claims

1. An intake manifold for an internal combustion engine, being variable in an intake length, comprising: a first volume chamber (1) disposed in a downstream side of a throttle valve (101) for controlling an intake air passing through an air-cleaner (110); first independent intake passages (2) being divided from said first volume chamber (1) for guiding the air within said first volume chamber (1) into each of cylinders (132); second independent intake passages (3) joining and conducting to each of said first independent intake passages (2), each of which is provided for said each of cylinders (132) respectively; a second volume chamber (4) conducting to all of said second independent intake passages (3); and valves (20) being provided in said independent intake passages (2, 3) for conducting/ shutting off between said second volume chambers (4) and said first independent intake passage (2), wherein
said first independent intake passage (2) and said first volume chamber (1) are built up with a plural number of synthetic resin molded members, and said second independent intake passage (3) surrounding said valve (20) is formed with a synthetic resin molded member being separate from the synthetic resin molded member forming said first volume chamber (1) and said first independent intake passage (2).

2. An intake manifold for an internal combustion engine as described in the claim 1, wherein a driving means (50) for opening/closing said valve (20) is provided in the synthetic resin molded member forming said second independent intake passage (3) surrounding said valve (20).

3. An intake manifold, as described in the claim 1 or 2, being constructed with a main intake passage module portion (60) having said first volume chamber (1) and said first independent intake passages (2), and at least two pieces of sub-modules, each being a variable intake module portion (61), which has said second independent intake passages (3), said second volume chamber (4) and the valves (20), wherein
said main intake passage module (60) comprises a cross-section of said second independent intake passage (3) divided from said first independent intake passage (2), or an air passage opening portion at a branch portion where said second independent intake passage (3) is divided from said first independent intake passage (2);
said variable intake module portion (61) comprises an intake passage opening portion in the cross-section of said second independent intake passage (3); and
said main intake passage module portion (60) and said variable intake module portion (61) are connected with at said intake passage opening portion, thereby attaching said variable intake module portion (61) onto said main intake passage module portion (60) detachably.

4. An intake manifold, as described in the claim 3, wherein said main intake passage module portion (60) is usable as an intake manifold without the variable intake function, by connecting a plug for covering said intake passage opening portion at said intake passage opening portion of said main intake passage module portion (60), as other than said intake manifold being variable in the length intake thereof, being connected with said variable intake module portion (61).

5. An intake manifold, as described in the claim 1, wherein said main intake passage module portion (60) forming said first independent intake passages (2) is formed through injection mold by a lost core method, in which the intake passage portion is made up with a core of a low-melting metal, and in a clamping process of said injection mold, the core of the low-melting metal is held by a die at said intake passage opening portion divided from said first independent intake passage (2).

6. An intake manifold, as described in the claim 3, 4 or 5, wherein a vacuum tank (8) is formed when connecting said main intake passage module portion (60) and said variable intake module portion (61).

7. An intake manifold, as described in the claim 1, 2, 3, 4, 5 or 6, wherein said first volume chamber (1) and said second volume chamber (4) are conducted, respectively, through passages other than said first independent intake passages (2) and said second independent intake passages (3).

8. A manifold of independent intake passages, being built up with a plural number of passage bodies, each of which is formed with a volume chamber at one end and a connecting flange portion at the other end, in which an opening is formed in each said passage body at a middle position between said volume chamber and said connecting flange, and other flange portion is formed around said each opening, wherein
each said intake passage body is built up with separate molded bodies, a first portion defined by a surface along with an air flow on a side having said opening portion, and a second portion on a side having no opening portion, and each said passage body is built up by connecting said first and second portions.

9. A manifold of independent intake passages, as described in the claim 8, wherein at both ends of said first portion are formed said first volume chamber (1) and said flange portion, respectively, in one body.

10. A manifold of independent intake passages, as described in the claim 8, wherein said other flange portions are formed as one piece of flange portion in common with all openings.

11. A manifold of independent intake passages, as described in the claim 8, wherein said each passage body is wound, and said opening is formed in a portion inside the wound portion of said each passage body.

12. A manifold of independent intake passages, as described in the claim 8, 9, 10 or 11, further comprising a molded body having other volume chamber conducting to an inside of said each intake passage body through said opening.

13. A manifold of independent intake passages, as described in the claim 12, further comprising an open/close valve (20) in the passage portion between said opening portion and said other volume chamber.

14. A manifold of independent intake passages, as described in the claim 13, wherein an actuator (52) for driving said open/close valve (20) is mounted on an outer wall of said molded body.
